# EUROPEAN PATENT SPECIFICATION

(11) **EP 1 628 842 B1**
(45) Date of publication and mention of the grant of the patent: **14.07.2010**
(21) Application number: 04748597.4
(22) Date of filing: 19.05.2004
(51) Int. Cl.: B60B 31/02

(54) **DEVICE AND METHOD FOR STRAIGHTENING SPOKED WHEELS**
VORRICHTUNG UND VERFAHREN ZUM ABRICHTEN VON SPEICHENRÄDERN
DISPOSITIF ET PROCEDE DE REDRESSAGE DE ROUES A RAYONS

(30) Priority: 23.05.2003 NL 1023514
(43) Date of publication of application: 01.03.2006
(73) Proprietor: Holland Mechanics BV, 1442 PZ Purmerend (NL)
(72) Inventor: CRUIJFF, Marcel, NL-1127 PH Den Ilp (NL); ADMIRAAL, Antonius, Simon, NL-1906 CT Limmen (NL)
(74) Representative: Uittenbogaart, Gustaaf Adolf
(86) International application number: PCT/NL2004/000362
(87) International publication number: WO 2004/103734

(56) References cited:
- EP-A- 0 476 749
- WO-A-00/16996
- WO-A-99/12754

## Description

The invention relates to a device in accordance with the preamble of Claim 1. A device of this type is known from EP A 0 476 749. With the known device, a rim is straightened by adjusting the tension in the spokes, in such a manner that the rim has an axial and radial deviation from a centred position which is less than a settable value. In this case, the centred axial position of the rim is adjusted to a set axial position with respect to the hub sleeve.

The drawback of the known device is that the set centred axial position of the hub is not the same for each rotational position of the axle, since the axis of rotation of the hub sleeve does not always correspond to the centre axis of the axle. The result of this is that when the wheel is placed in a bicycle in such a manner that the rim is arranged centrally between the fork and the rim brake, the rim is not always aligned in the centre of the bicycle where it meets the road, and consequently the bicycle is not correctly aligned.

To avoid this drawback, the device is designed in accordance with Claim 1. This makes it easy to measure the skew position of the axle with respect to the axis of rotation of the hub sleeve while making it possible to make do with measuring the axial position of the rim at one position in the device, and consequently there are no problems with adapting to different wheel diameters.

According to a refinement, the device is designed in accordance with Claim 2. This enables the entire axial travel resulting from the skew position of the axis of rotation to be measured, so that the axial position of the rim can be corrected accurately for this skew position.

According to a further improvement, the device is designed in accordance with Claim 3. This makes it easy to determine the axial position of the axle with respect to the rim.

According to a further improvement, the device is designed in accordance with Claim 4. This allows stable and accurate measurement.

According to a further refinement, the device is designed in accordance with Claim 5. This allows the rotating axial clamp to be of compact structure.

According to a further refinement, the device is designed in accordance with Claim 6, resulting in a device which is simple to control.

The invention also comprises a method according to Claim 7. This makes it easy to set the control to the correction required for straightening.

The invention is explained below on the basis of an exemplary embodiment and with reference to a drawing, in which:
Figure 1 shows a diagrammatic cross section through a wheel in a straightening machine,
Figure 2 shows a perspective view of an axial clamp as can be used in the straightening machine of Figure 1, and
Figure 3 shows a cross section through the axial clamp as shown in Figure 2.

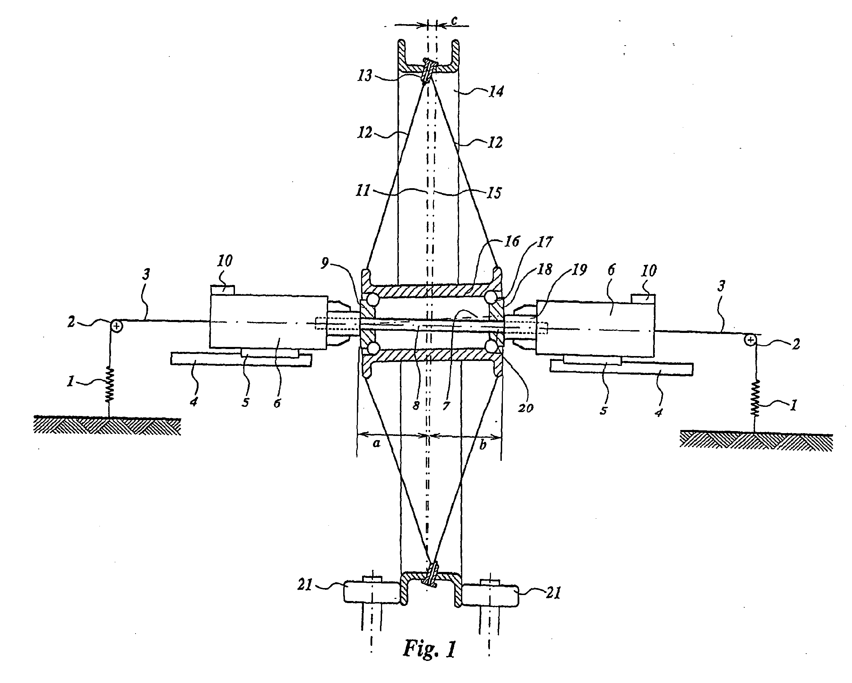

Figure 1 shows a wheel which comprises a rim 14 which is secured by spokes 12 to a hub; the length of the spokes 12 can be altered by screwing a nipple 13 onto a spoke to a greater or lesser extent. The hub comprises a hub sleeve 16 with ball raceways in which balls 17 can rotate. The balls 17, on one side of the hub sleeve, run over a first axial nut 9 and, on the other side, over a second axial nut 18. The first and second axial nuts 9 and 18 are screwed onto an axle 20. When the wheel is in use, this axle 20 is mounted in the frame of, for example, a bicycle and has an axial centre axis 8. Since the first axial nut 9 and/or the second axial nut 18 are not always accurate, the path for the balls 17 may run eccentrically around the axle centre axis 8, in which case the hub sleeve 16 rotates about an axis of rotation 7 which forms an angle with the axle centre axis 8.

The wheel is positioned in a straightening machine, of which only a few components are diagrammatically indicated, since most components correspond to those of the known straightening machines. The axle 20 is clamped on either side in an axial holder 19; the axial holder 19 forms part of an axial clamp 6 which is secured to a carriage 5 that can move over a rail 4 in the direction of axle centre axis 8. The movement and/or position of the axial clamps 6 along the rail 4 is measured by encoders 2. For this purpose, a toothed belt 3 is placed under tension by a spring 1, the belt 3 is guided around the encoder 2 and secured to the axial clamp 6. The rotational position of the encoders 2 is read electronically and processed in a control unit (not shown).

To clamp the axle 20 in place, the axial clamps 6 are pulled together by a spring (not shown) and then clamped around the axle 20. As a result, the axial holders 19 rest against the first axial nut 9 and the second axial nut 18. The rim 14 is clamped on the underside between two drive rolls 21. Tightening or loosening the spokes 12 in the vicinity of the drive rolls 21 causes the hub sleeve 16 to be moved in the direction of one of the carriages 4, and the new position is measured by the encoders 2. The control unit will carry out the tightening or loosening in such a manner that a perpendicular plane 15 running at right angles to the axle 20, centrally between the drive rolls 21, is at a first distance a and a second distance b from the axial holders 19. The values a and b are adjustable and are dependent on the use of the wheel, defining, inter alia, whether the front wheel of a bicycle and the rear wheel are positioned directly in line with one another. During the straightening operation, the entire circumference of the rim 14 is successively moved between the drive rolls 21, and the axle 20 is always moved to the set values for the first distance a and the second distance b until the deviation therein is within the set tolerance. The radial travel is also measured at the same time by a measuring device (not shown) and brought to within the set tolerance. Then, the axial clamps 6 are uncoupled and moved outwards by a pneumatic cylinder, and the wheel is taken out of the machine.

Figure 1 shows the consequence of this method of action if the axis of rotation 7 of the wheel forms an angle with the axle centre axis 8. As a result of the straightening of the wheel, the centre of the rim 14 is located in a centre plane 11. This centre plane 11 passes centrally between the drive rolls 21 and also forms an angle with the axle centre axis 8. In the position on the opposite side from the drive rolls 21, the centre plane 11 is located at a distance c from the perpendicular plane 15. Adjusting the set distances a and b as a function of the maximum measured skew position allows the maximum deviation which occurs to be reduced. For this purpose, when the rim 14 is stationary, the axle 20 is rotated through approximately 360° while the axial displacement of the axle 20 is being measured with the encoders 2. The set values for the distances a and b are corrected on the basis of the measured results, and the corrected values are used during straightening of the wheel, so that the disadvantageous effect of the angle between axle centre axis 8 and the axis of rotation of the wheel 7 is minimized.

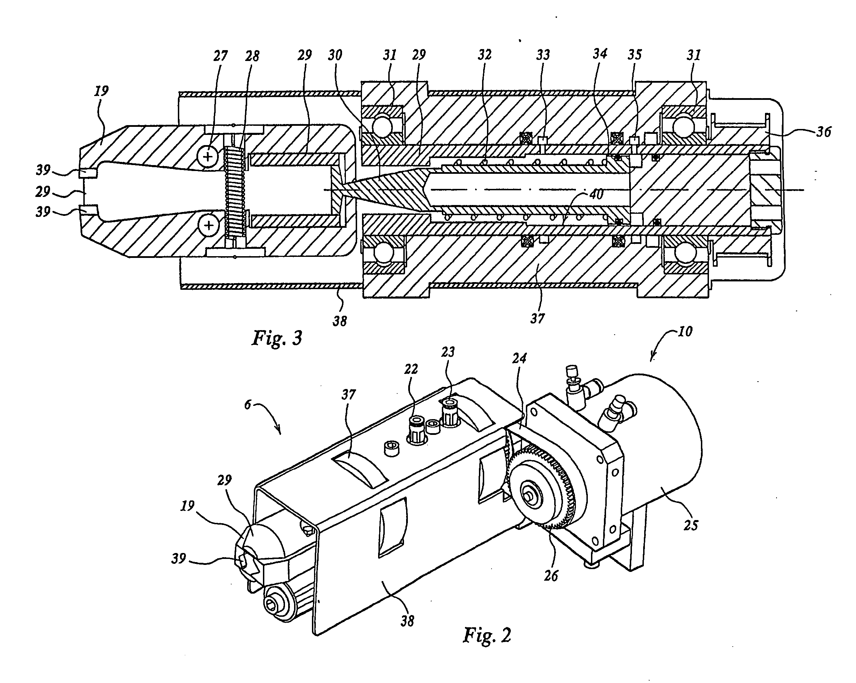

Figures 2 and 3 provide a more detailed illustration of the axial clamp 6. The axial clamp 6 has a housing 37 in which bearings 31 are mounted. The housing is secured to the carriage 5 (cf. Figure 1), which can move along the rail 4. A rotatable part 29 can rotate in the bearings 31. The rotatable part 29 is provided with two axial holders 19. The axial holders 19 can each rotate about a pin 27 mounted in the rotating part 29 and are each provided, at the end facing towards the axle 20, with a centring recess 39, within which the axle 20 can be clamped. Centring recesses 39 of the axial holders 19 are pulled apart under the influence of a spring 28, with the result that the axle 20 can be placed between them. A wedge 30 presses the other ends of the axial holders 19 apart, with the result that the centring recesses 39 move towards one another and clamp the axle 20 in place.

The wedge 30 forms part of a body which moves inside the rotating body 29 and is provided with a piston 34 which moves in a sealed manner in a cylinder 40 in the rotating body 29. Under the influence of air pressure, the piston 34 in the cylinder 40 moves and presses those ends of the axial holders 19 which are remote from the axle 20 apart, with the result that the centring recesses 39 move apart. The spring pressure of a spring 32 pushes the piston 34 back, with the result that the centring recesses 39 are moved apart again by the spring 28. The centre axis of the cylinder 40 corresponds to the centre axis of the rotating body 29.

A belt pulley 36 is arranged on the rotating body 29. The belt pulley 36 is rotated by a toothed belt 24, which is driven by a belt pulley 26 mounted on the axle of a rotary cylinder 25. The rotary cylinder 25 has two stable positions, between which the axle of the rotary cylinder 25 can rotate through 270°. On account of the fact that the ratio of the number of teeth on the belt pulley 36 and the belt pulley 26 is three to four, the rotating body 29 will rotate through 360°. A cover cap 38 is mounted around the housing 37 and the projecting part of the rotary body 29.

To move the piston 34, an air connection 23 is connected via an annular air duct 35 to the inside of the cylinder 40. If the piston 34 presses the wedge 30 between the axial holders 19 and there is no axle 20 between the centring recesses 39, the piston 34 will move so far into the cylinder 40 that the piston 34 opens up openings in the wall of the cylinder 40, with the result that an annular air duct 33 is connected to the inside of the cylinder 40. As a result, air blows through openings in the wall of the cylinder 40 into the duct 33 and to the air connection 22. A detector (not shown) records the blowing of air and emits a signal to the control unit, with the result that the control unit knows whether or not there is an axle 20 in the axial clamp 6.

## Claims

1. Device for straightening spoked wheels which each comprise a hub sleeve (16) provided with an axle (20), a rim (14) and, fitted between the hub sleeve and the rim, spokes (12) with nipples (13) which can be screwed onto the spokes, the device comprising an axial clamp (6) for clamping the axle, measurement means (2) for, in a first circumferential position, measuring the position in the axial and radial directions of a cross section through the rim with respect to the axle, straightening means for rotating one or more nipples with respect to the associated spokes as a function of the measured position(s), and drive means (21) for moving the rim past the first circumferential position, **characterized in that** the axial clamp (6, 19) is provided with rotation means (25, 29) for rotating the axle (20) with respect to the first circumferential position.

2. Device according to Claim 1, in which the rotation means (25, 29) can rotate the axial clamp (6, 19) through at least 360°.

3. Device according to Claim 1 or 2, which is provided with drive rolls (21) for rotating the rim (14) and positioning it in the axial direction, and in which the measuring means comprise a sensor (2) for measuring the axial displacement of the axial clamp (6).

4. Device according to Claim 1, 2 or 3, in which the axial clamp and the rotation means are positioned on a carriage (5) which can be displaced in the axial direction.

5. Device according to one of the preceding claims, in which the axial clamp (6) comprises a wedge (30) which can be moved by a piston (34) which piston has a centre axis which corresponds to the centre axis (8) of the axle (20).

6. Device according to one of the preceding claims, in which the rotation means comprise a drive (10) with two limit positions, such as a rotary cylinder (25).

7. Method for straightening a spoked wheel, in which a wheel, composed of a hub sleeve (16) with an axle (20) and a rim (14), with spokes (12) between the hub sleeve and the rim, is placed in a straightening device according to claim 1 by clamping the axle of the wheel in an axial clamp (6), after which, during the straightening operation, the rim is rotated about the stationary axle by drive means (21), **characterized in that** prior to the straightening operation the axle (20) is rotated through at least 360° with respect to the rim (14).

## Patentansprüche

1. Gerät zum Richten von Speichenrädern, von denen jedes eine Nabenbuchse (16), die mit einer Achse (20) ausgestattet ist, eine Felge (14) und zwischen die Nabenbuchse und die Felge eingesetzte Speichen (12) mit Nippeln (13), die auf die Speichen geschraubt werden können, aufweist, wobei das Gerät ein axiales Einspannmittel (6) zum Einspannen der, Messmittel (2) zum Messen der Position eines Querschnitts durch die Felge im Verhältnis zur Achse in axialer und in radialer Richtung in einer ersten Umfangsposition, Richtmittel zum Drehen eines oder mehrerer Nippel im Verhältnis zu den entsprechenden Speichen in Abhängigkeit von der/den gemessenen Position(en) und Antriebsmittel (21) zum Bewegen der Felge über die erste Umfangsposition hinaus umfasst, **dadurch gekennzeichnet, dass** das axiale Einspannmittel (6, 19) mit Rotationsmitteln (25, 29) zum Drehen der Achse (20) im Verhältnis zur ersten Umfangsposition ausgestattet ist.

2. Gerät nach Anspruch 1, bei welchem die Rotationsmittel (25, 29) das axiale Einspannmittel (6, 19) um mindestens 360° drehen können.

3. Gerät nach Anspruch 1 oder 2, das mit Antriebsrollen (21) ausgestattet ist, um die Felge (14) zu drehen und sie in axialer Richtung anzuordnen, und bei dem die Messmittel einen Sensor (2) zum Messen der axialen Verschiebung des axialen Einspannmittels (6) umfassen.

4. Gerät nach Anspruch 1, 2 oder 3, bei welchem das axiale Einspannmittel und die Rotationsmittel auf einem Träger (5) angeordnet sind, der in axialer Richtung verschiebbar ist.

5. Gerät nach einem der vorhergehenden Ansprüche, bei welchem das axiale Einspannmittel (6) einen Keil (30) umfasst, der durch einen Kolben (34) bewegt werden kann, wobei der Kolben eine Mittelachse aufweist, die der Mittelachse (8) der Achse (20) entspricht.

6. Gerät nach einem der vorhergehenden Ansprüche, bei welchem die Rotationsmittel einen Antrieb (10) mit zwei Begrenzungspositionen wie beispielsweise einen Rotationszylinder (25) umfassen.

7. Verfahren zum Richten eines Speichenrades, bei welchem ein Rad, das aus einer Nabenbuchse (16) mit einer Achse (20) und einer Felge (14) mit Speichen (12) zwischen der Nabenbuchse und der Felge zusammengesetzt ist, in einem Gerät zum Richten nach Anspruch 1 durch Einspannen der Achse des Rades in einem axialen Einspannmittel (6) angeordnet wird, wonach während des Richtvorganges die Felge durch Antriebsmittel (21) um die feststehende Achse gedreht wird, **dadurch gekennzeichnet, dass** die Achse (20) vor dem Richtvorgang im Verhältnis zur Felge (14) um 360° gedreht wird.

## Revendications

1. Dispositif pour redresser des roues à rayons qui comprennent chacune un manchon de moyeu (16) muni d'un axe (20), une jante (14) et, installés entre le manchon de moyeu et la jante, des rayons (12) avec des écrous de rayon (13) qui peuvent être vissés sur les rayons, le dispositif comprenant un dispositif de serrage axial (6) pour serrer l'axe, un moyen de mesure (2) pour, dans une première position périphérique, mesurer la position dans les directions axiale et radiale d'une section transversale de la jante par rapport à l'axe, un moyen de redressement pour tourner un ou plusieurs écrous de rayon par rapport aux rayons associés en fonction de la ou des positions mesurées, et un moyen d'entraînement (21) pour déplacer la jante au-delà de la première position périphérique, **caractérisé en ce que** le dispositif de serrage axial (6, 19) est muni d'un moyen de rotation (25, 29) pour faire tourner l'axe (20) par rapport à la première position périphérique.

2. Dispositif selon la revendication 1, dans lequel le moyen de rotation (25, 29) peut faire tourner le dispositif de serrage axial (6, 19) d'au moins 360°.

3. Dispositif selon la revendication 1 ou 2, qui est muni de rouleaux d'entraînement (21) pour faire tourner la jante (14) et la positionner dans la direction axiale, et dans lequel le moyen de mesure comprend un capteur (2) pour mesurer le déplacement axial du dispositif de serrage axial (6).

4. Dispositif selon la revendication 1, 2 ou 3, dans lequel le dispositif de serrage axial et le moyen de rotation sont positionnés sur un chariot (5) qui peut être déplacé dans la direction axiale.

5. Dispositif selon l'une des revendications précédentes, dans lequel le dispositif de serrage axial (6) comprend un coin (30) qui peut être déplacé par un piston (34), le piston ayant un axe central qui correspond à l'axe central (8) de l'axe (20).

6. Dispositif selon l'une des revendications précédentes, dans lequel le moyen de rotation comprend un entraînement (10) avec deux positions limite, comme un cylindre rotatif (25).

7. Procédé pour redresser une roue à rayons, dans lequel une roue, composée d'un manchon de moyeu (16) muni d'un axe (20) et d'une jante (14), avec des rayons (12) entre le manchon de moyeu et la jante, est placée dans un dispositif de redressement selon la revendication 1 en serrant l'axe de la roue dans un dispositif de serrage axial (6), après quoi, durant l'opération de redressement, la jante est tournée autour de l'axe fixe par un moyen d'entraînement (21), **caractérisé en ce que**, avant l'opération de redressement, l'axe (20) est tourné d'au moins 360° par rapport à la jante (14).
